# EUROPEAN PATENT SPECIFICATION

(11) **EP 3 791 708 B1**
(45) Date of publication and mention of the grant of the patent: **04.08.2021**
(21) Application number: 20195787.5
(22) Date of filing: 11.09.2020
(51) Int. Cl.: A01D 34/00

(54) **LAWN MOWER ROBOT**
RASENMÄHERROBOTER
ROBOT TONDEUSE À GAZON

(30) Priority: 13.09.2019 IT 201900016217
(43) Date of publication of application: 17.03.2021
(73) Proprietor: Bernini, Fabrizio, 52021 Bucine - Arezzo (IT)
(72) Inventor: Bernini, Fabrizio, 52021 Bucine - Arezzo (IT)
(74) Representative: Milli, Simone

(56) References cited:
- EP-A2- 1 532 856
- DE-A1-102006 027 018
- FR-A1- 2 329 188
- FR-A1- 3 069 812
- US-A- 4 964 265
- US-A1- 2007 260 370

## Description

This invention relates to the technical sector of gardening systems.

In particular, the invention relates to a lawn mower robot.

The lawn mower robots of known type usually comprise a load-bearing frame, in particular having an outer body, to which are associated cutting means for the maintenance of the lawn and movement means which allow the frame to be supported guiding the robot along a feed trajectory inside the working area on which it is positioned to operate.

The movement means are typically made using a plurality of wheels of which at least one is motor-driven, that is, connected to a motor configured to rotate it, thus allowing the advancing of the robot in the operating area. The movement means are also designed to orient the wheels in such a way as to modify the trajectory adopted by the robot, allowing them to progressively operate on the entire working area.

Some examples of movement means for lawn mower robots may be described in patent documents FR2329188, FR3069812A1 and EP1532856.

FR3069812A1 discloses a rolling machine comprising a rolling frame and a system for rotating the drive wheels of the machine comprising a motor for propelling the machine being equipped with a motor shaft, and at least two mechanical links, each mechanical link being arranged between the motor shaft of the motor for propelling the machine and one of the drive wheels of the machine for transmitting the rotational movement of the drive shaft of the propulsion motor of the machine to the associated drive wheel. At least two of the driving wheels are steered wheels and in that at least part of the mechanical connection between the driving shaft of the motor for propelling the machine and the drive wheel and associated steering comprises a rotating flexible shaft capable of being driven in rotation by the drive shaft of the engine for propelling the machine.

In general, it is evident that the efficient operation of the robot is greatly influenced by the efficiency of its movement means, since they determine its capacity to move inside the area in which it must operate.

In this context, the technical purpose which forms the basis of this invention is to provide a lawn mower robot which is highly efficient.

In particular, the aim of the invention is to provide a lawn mower robot equipped with solid and reliable movement means which are at the same time able to give the robot a high level of mobility and manoeuvrability. The technical purpose indicated and the aims specified are substantially achieved by a lawn mower robot comprising the technical features described in one or more of the appended claims.

The invention describes a lawn mower robot which comprises a frame, movement means associated with the frame for moving it along a working trajectory and cutting means configured for cutting a lawn, adjusting the height.

The movement means comprise at least one movement module in turn comprising a wheel which defines internally a containment space (hollow). The containment space is defined by the inner cavity present on the wheel.

The movement means further comprise a rotation motor located at least partly inside the containment space and configured to control the axial rotation of the wheel and an orientation motor mounted on the frame to orient the wheel in a predetermined direction.

It should be noted that the rotation motor allows the forward movement (rolling) of the wheel on the lawn, whilst the orientation motor allows the direction of forward movement of the wheel to be adjusted. Advantageously, the movement means according to the invention are particularly compact, integrating at least partly the rotation motor inside the wheel, thus placing it in a protected position and immediately in contact with the element which they must move.

Further features and advantages of this invention are more apparent in the detailed description below, with reference to a preferred, non-restricting, embodiment of a lawn mower robot as illustrated in the accompanying drawings, in which:
- Figure 1 shows a view of a possible embodiment of a lawn mower robot according to the invention;

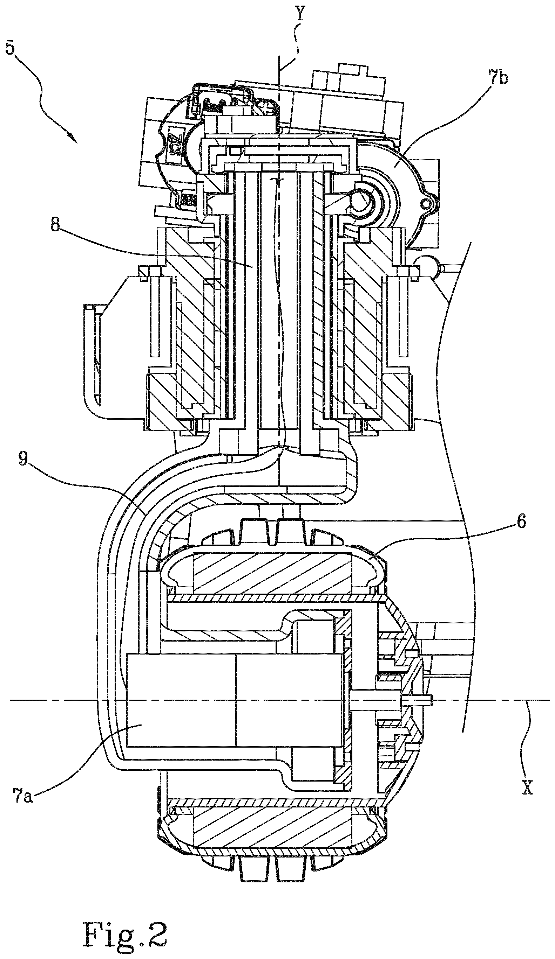

- Figure 2 is a cross section of a module for moving a lawn mower robot;
- Figure 3 shows a view of a detail of the lawn mower robot according to the invention.

In the accompanying drawings, the numeral 1 denotes in general a lawn mower robot, referred to below simply as the robot 1.

The robot 1 is of the self-propelled type, that is to say, it is movable in a substantially autonomous manner along a working trajectory which extends inside a work area, in particular to perform an operation for maintenance of the surface of the area.

In this context, the working area may be, for example, a lawn, a garden or in general any surface on which it may be necessary to perform an operation for cutting and adjusting the height of the grass.

The robot 1 comprises a frame 2, cutting means 3 and movement means 4.

The frame 2 is made, for example, of semi-rigid material, preferably plastic, and is shaped to support the various components which form part of the robot 1 and to protect the more delicate parts from any impacts with obstacles present in the working area.

The cutting means 3 are associated, in particular mounted, on the frame 2 and may comprise one or more blades 3a designed to perform operations for cutting grass.

The cutting means 3 also comprise suitable drive means 3b (for example, electric motors) configured to generate the power necessary for moving the cutting blades 3a.

The movement means 4 are also mounted on the frame 2, in such a way as to move the robot 1 inside the working area, in particular along the working trajectory.

In particular, the movement means 4 comprise at least one movement module 5 which in turn comprises an adjustable drive wheel 6, a rotation motor 7a and an orientation motor 7b.

The adjustable drive wheel 6 defines inside it a containment space (cavity) in which the rotation motor 7a is installed.

In other words, the rotation motor 7a is positioned at least partly (preferably for more than or equal to 50% of the space defined by the motor 7a, still more preferably for more than or equal to 75% of the space defined by the motor 7a) inside the adjustable drive wheel 6.

In this way, the rotation motor 7a is oriented, by driving the orientation motor 7b as one with the adjustable drive wheel 6.

Preferably, the rotation motor 7a is located entirely inside the containment space of the drive wheel 6.

Advantageously, the rotation motor 7a is installed coaxially with the adjustable drive wheel 6 and is configured for controlling an axial rotation (about the axis of rotation X) of the wheel 6, preferably in both opposite directions of rotation, allowing in this way the movement of the robot 1 on the grass, that is, the forward movement of the wheel 6, in rolling motion. The orientation motor 7b, on the other hand, is designed to orient the adjustable drive wheel 6 in a predetermined direction, in such a way as to modify the forward movement direction of the robot 1 guiding it in this way along the working trajectory.

In particular, the orientation motor 7b is mounted on (preferably integral with) the frame 2.

The robot further comprises an orientation shaft 8, to which the orientation motor 7b is connected for rotating it.

It should be noted that the connection between the rotation shaft 8 and the orientation motor 7b may be direct or indirect and occurs through any mechanical torque transmission element (e.g. gears).

The shaft 8 for orientation of the wheel 6 is rotatably supported by said frame 2 rotating about an orientation axis Y at right angles to the axis X of rotation of the adjustable drive wheel 6 and carries the adjustable drive wheel 6 and the rotation motor 7a (supporting the weight).

It should be noted that the orientation motor 7b is connected to the orientation shaft 8 for rotating it (about the orientation axis Y) and orienting said adjustable drive wheel 6, rotating it about said orientation axis Y, in a predetermined direction.

In other words, the orientation motor 7b is designed to incline the axis of rotation "X" of the wheel relative to the feed direction of the robot 1, in such a way as to modify the trajectory of the robot 1 advancing on the grass.

Preferably, the maximum angle of rotation of the adjustable drive wheel 6 (about the orientation axis Y) is, relative to an angle of zero (corresponding to a forward movement along a predetermined "zero steering" direction of the robot) greater than or equal to ±45° (excursion 90°).

Preferably, therefore, the maximum angular excursion (in rotation about the orientation axis Y) of the adjustable drive wheel 6 is greater than or equal to 90°.

Preferably, the maximum angle of rotation of the adjustable drive wheel 6 (about the orientation axis Y) is, relative to zero (corresponding to a forward movement along a predetermined "zero steering" direction of the robot) greater than or equal to ±90° (excursion 180°).

Preferably, therefore, the maximum angular excursion (in rotation about the orientation axis Y) of the adjustable drive wheel 6 is less than or equal to 180°.

Preferably, the orientation shaft 8 is hollow inside.

Preferably, the orientation shaft 8 is designed to house an electrical wiring 9 of the movement module 5, in particular at least the electrical wiring necessary to power the rotation motor 7a which is inside the adjustable drive wheel 6.

Moreover, the robot 1 may comprise measuring means associated with the at least one movement module 5 and configured for measuring parameters representing the motion of the wheel 6, for example a speed of rotation and/or an orientation of the respective adjustable drive wheel 6 (about the orientation axis Y).

In other words, the measuring means comprise one or more sensors which monitor the at least one movement module 5, in such a way as to measure information regarding its operation during the use of the robot 1. The wiring necessary for operation of the measuring means and/or the measuring means themselves may also be at least partly inserted in the shaft 8 (hollow).

Preferably, the measuring means are further configured for comparing the representative parameters measured with respective predetermined values, thus generating control signals of the rotation motor 7a and/or of the orientation motor 7b configured for correcting any deviation of the parameters measured relative to the predetermined values.

In other words, during operation of the robot 1, the measuring means continuously monitor the speed and the direction of forward movement, modifying them, adjusting them if they deviate from a predetermined ideal behaviour.

Operatively, the robot 1 comprises a control unit which stores the information necessary for its operation, in particular with respect to the various trajectories which the robot 1 may follow inside the working area and to how it must behave in the presence, for example, of obstacles. Once the trajectory to be followed by the detecting means has been calculated, they can guarantee that the robot 1 actually follows the trajectory determined by the control unit, checking that the speed and the orientation of the adjustable drive wheels 6 actually coincides with the planned one.

According to a particular embodiment, the movement means 4 comprise a plurality of movement modules 5, preferably two movement modules 5. For this reason, the robot 1 preferably comprises at least two movement modules 5 which are configured to perform the dual function of moving it and defining the feed trajectory.

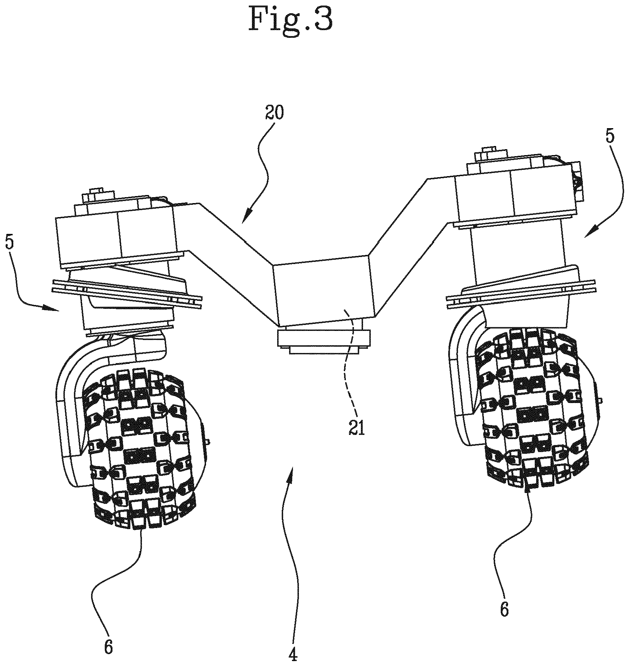

The movement means 5 can also comprise at least one axle 20 (illustrated schematically in Figure 3) designed to connect each movement module 5 to the frame 2 and configured to be movable (rotate) about a reference axis, between a lowered position and a raised position relative to the frame 2.

In other words, the adjustable motor-driven wheels 6 can modify the relative height relative to the frame 2 thanks to the movement between the lowered position and the raised position of the axle 20, allowing the robot 1 to move correctly even in the presence of uneven ground.

More in detail, each axle has a first portion, connected (for example hinged) to the frame 2, and a second portion, coupled to the movement module 5.

If there is only one movement module 5, the axle 20 may be made in the form of an arm, wherein the first portion coincides with a relative first end and the second portion coincides with a relative second end.

If, on the other hand, there are several movement modules 5, it is possible to make the axle by means of a plurality of arms, each coupled at a first end with a respective movement module 5 and the second end of which is hinged to the frame 2.

Alternatively, it is possible to make an axle 20 having a central portion coupled to the frame 2 from which arms extend which connect to the respective movement modules 5.

In the first case, the axle 20 will have a plurality of separate pivot points for its rotation from the lowered position to the raised position, in the second case only one of them will coincide with the central portion of the axle.

In the presence of the axle 20, the movement means 4 also comprise elastic means 21 (shown schematically in Figure 3) configured in such a way as to operate on each axle in opposition to the respective raising motion.

In accordance with an aspect of the invention, the elastic means 21 comprise an elastic element interposed between the axle 20 and the frame 2 at a predetermined distance from the respective reference axis.

In this way, the elastic element is positioned in such a way as to oppose the rotation of the corresponding axis in particular according to the raising motion of the axle 20 itself.

According to a possible embodiment, the elastic means 21 comprise, for example, a torsion spring or a traction or compression spring positioned perpendicularly to the reference axis.

For this reason, when the robot 1 encounters an obstacle or an irregularity of the ground and is able to overcome it, the adjustable drive wheel 6 is positioned at a level slightly higher than the other wheels of the device causing the rotation of the corresponding axle about its fulcrum of rotation. During the raising motion, the axle 20 encounters the resistance formed by the elastic means 21 which will therefore tend to return it to the initial lowered position once the obstacle has been passed, guaranteeing at the same time an optimum adherence to the ground when the axle is in the raised position.

In addition to the movement modules 5, the movement means 4 may comprise a plurality of pivoting idle wheels, in particular the movement means 4 may comprise two pivoting idle wheels.

The pivoting idle wheels can rotate freely during the advancing of the robot 1 and also freely incline the relative orientation axis "Y" to follow the changes of direction made by the robot 1 by means of the at least one movement module 5.

The pivoting idle wheels can also be connected to the frame 2 by means of a respective axle (not illustrated).

For this reason, the movement means 4 may comprise an axle designed to connect each pivoting idle wheel to the frame and respective elastic means which have the same operation as the axles which connect the movement modules 5 to the frame 2.

It is also possible that a single axle connected to the frame is either one or more movement modules 5 and one or more pivoting idle wheels. According to another aspect of this invention, the movement means 5 may comprise two fixed drive wheels integral with the frame 2 and connected or connectable to a rotation motor 7a configured to perform an axial rotation. In other words, the movement means according to the invention comprise at least one movement module 5 which as well as promoting the forward movement of the robot 1 allows the trajectory to be determined, to which it is possible to add, as a function of the specific operating needs of the individual robots 1 and their structure, further movement modules 5 and/or one or more pivoting idle wheels and/or two fixed drive wheels integral with the frame 2.

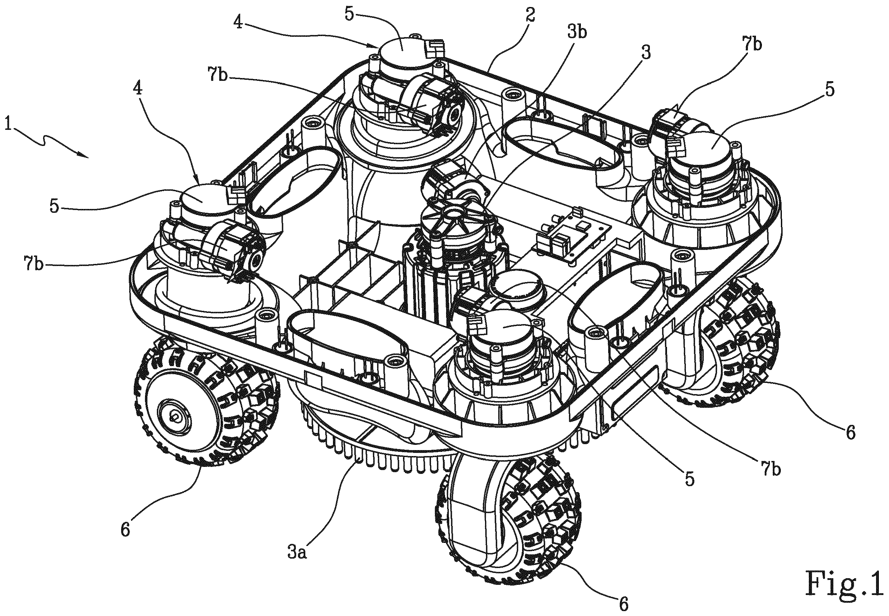

By way of example, Figure 1 shows a robot 1 comprising four movement modules 5 positioned at respective vertices of the frame 2. Advantageously, the lawn mower robot 1 according to the invention achieves the preset aims by providing a simple and efficient configuration wherein the motors designed to allow the forward movement of the robot 1 along the working trajectory are situated at the wheels and protected inside them, avoiding the risk of their possible damage following impacts with obstacles present inside the working area.

According to another aspect, the orientation shaft 8 is movable vertically relative to the frame 2.

In other words, the orientation shaft 8 can be raised and lowered relative to the frame 2 (in its normal rest operating position), to allow an adjustment of the height of the frame 2 relative to the ground. Advantageously, this allows the robot to be adapted, in a particularly quick and easy manner, to different cutting heights, as a function of the specific needs of the customers.

In fact, by adjusting the position in height of the orientation shaft 8, it is also possible to adjust the position in height of the cutting means 3 (carried by the frame 2).

It should be noted that the robot further comprises means for locking the orientation shaft 8 in the desired position, not illustrated.

## Claims

1. A lawn mower robot comprising:
- a frame (2);
- cutting means (3) configured for cutting a lawn, adjusting the height of said lawn;
- movement means (4) associated with the frame (2) for moving it along a working trajectory;
said movement means (4) comprising at least one movement module (5) comprising:
- an adjustable drive wheel (6) defining internally a containment space;
- a rotation motor (7a) positioned at least partly inside the containment space and configured for controlling an axial rotation, about a respective axis (X) of rotation, of the adjustable drive wheel (6) to allow an advancing, with rolling, of the wheel (6) on the grass;
- a shaft (8) for orientation of the wheel (6), rotatably supported by said frame (2) rotating about an orientation axis (Y) at right angles to the axis (X) of rotation of the adjustable drive wheel (6) and supporting the adjustable drive wheel (6) and the rotation motor (7a),
- an orientation motor (7b) supported by the frame (2) and operatively connected to the orientation shaft (8) for rotating it about the orientation axis (Y) and orienting said adjustable drive wheel (6) in a predetermined direction;
**characterised in that** the movement means (4) comprise:
- at least one axle (20) designed to connect each movement module (5) to the frame (2) and configured to rotate about a reference axis, positioned perpendicularly to said axle, between a lowered position and a raised position relative to the frame (2),
- elastic means (21) configured to operate on the at least one axle (20) against a raising motion of said axle (20).

2. The robot according to claim 1, wherein in each movement module (5) the maximum angular excursion of the respective adjustable drive wheel (6) about the orientation axis (Y) is greater than or equal to 90°.

3. The robot according to claim 1 or 2, wherein in each movement module (5) the maximum angular excursion of the respective adjustable drive wheel (6) about the orientation axis (Y) is less than or equal to 180°.

4. The robot according to any one of the preceding claims, comprising measuring means associated with the at least one movement module (5) and configured for measuring parameters representing a speed of rotation and/or a orientation of the respective adjustable drive wheel (6), said measuring means being configured for comparing the parameters measured with respective predetermined values generating control signals of the rotation motor (7a) and/or of the orientation motor (7b) for correcting any deviation from said predetermined values.

5. The robot according to any one of the preceding claims, wherein the movement means (4) comprise a plurality of movement modules (5).

6. The robot according to the preceding claim, wherein the movement means (4) comprise two movement modules (5).

7. The robot according to any one of the preceding claims, wherein the movement means (4) comprise a plurality of pivoting idle wheels, preferably two pivoting idle wheels.

8. The robot according to the preceding claim, wherein said pivoting idle wheels are positioned at the front.

9. The robot according to claim 7 or 8, wherein the movement means (4) comprise:
- at least one axle designed to connect each pivoting idle wheel to the frame (2) and configured to rotate about a reference axis, positioned perpendicularly to said axle, between a lowered position and a raised position relative to the frame (2),
- elastic means configured to operate on the at least one axle against a raising motion of the respective axle.

10. The robot according to any one of claims 1 to 6, wherein the movement means (4) comprise two fixed drive wheels integral with the frame (2) and connected or connectable to at least one rotation motor (7a) configured for controlling an axial rotation of said fixed drive wheels.

11. The robot according to any one of the preceding claims, wherein the orientation shaft (8) of each movement module (5) is hollow and is designed to house at least one electrical cabling (9) of the movement module (5).

12. The robot according to any one of the preceding claims, wherein the orientation shaft (8) is movable vertically relative to the frame (2), to allow an adjustment in height of the frame (2) relative to the ground.

## Patentansprüche

1. Rasenmäherroboter, umfassend:
- einen Rahmen (2);
- Schneidmittel (3), die ausgelegt sind, um einen Rasen zu schneiden und dabei die Höhe des Rasens zu justieren;
- Bewegungsmittel (4), die mit dem Rahmen (2) assoziiert sind, um diesen entlang einer Arbeitsbahn zu bewegen, wobei die Bewegungsmittel (4) mindestens ein Bewegungsmodul (5) umfassen, umfassend:
- ein verstellbares Antriebsrad (6), das innenseitig einen Enthaltebereich definiert;
- einen Rotationsmotor (7a), der mindestens teilweise im Enthaltebereich positioniert und ausgelegt ist, um eine axiale Drehung um eine jeweilige Rotationsachse (X) des verstellbaren Antriebsrads (6) zu steuern, um mit Rollen einen Vorschub des Rads (6) auf dem Gras zu erlauben;
- eine Welle (8) zum Ausrichten des Rads (6), die drehbar vom Rahmen (2) getragen wird und sich um eine Ausrichtungsachse (Y) in rechten Winkeln zur Rotationsachse (Y) des verstellbaren Antriebsrads (6) dreht und das verstellbare Antriebsrad (6) und den Rotationsmotor (7a) trägt;
- einen Ausrichtungsmotor (7b), der vom Rahmen (2) getragen wird und betriebswirksam mit der Ausrichtungswelle (8) verbunden ist, um diese um die Ausrichtungsachse (Y) zu drehen und das verstellbare Rad (6) in eine vorgegebene Richtung auszurichten,
**dadurch gekennzeichnet, dass** die Bewegungsmittel (4) Folgendes umfassen:
- mindestens eine Achse (20), die ausgestaltet ist, um ein jedes Bewegungsmodul (5) mit dem Rahmen (2) zu verbinden und die ausgelegt ist, um sich zwischen einer abgesenkten Position und einer angehobenen Position relativ zum Rahmen (2) um eine Referenzachse zu drehen, die senkrecht zur Achse positioniert ist;
- elastische Mittel (21), die ausgelegt sind, um auf der mindestens einen Achse (20) gegen eine Anhebebewegung der Achse (20) zu wirken.

2. Roboter nach Anspruch 1, wobei die maximale Winkelauslenkung des jeweiligen verstellbaren Antriebsrads (6) um die Ausrichtungsachse (Y) bei einem jeden Bewegungsmodul (5) größer oder gleich 90° ist.

3. Roboter nach Anspruch 1 oder 2, wobei die maximale Winkelauslenkung des jeweiligen verstellbaren Antriebsrads (6) um die Ausrichtungsachse (Y) bei jeden Bewegungsmodul (5) kleiner oder gleich 180° ist.

4. Roboter nach einem der vorhergehenden Ansprüche, umfassend Messmittel, die mit dem mindestens einen Bewegungsmodul (5) assoziiert und ausgelegt sind, um Parameter zu messen, die eine Drehzahl und/oder eine Ausrichtung des jeweiligen verstellbaren Antriebsrads (6) repräsentieren, wobei die Messmittel ausgelegt sind, um die gemessenen Parameter mit jeweiligen vorgegebenen Werten zu vergleichen und Steuersignale der Motordrehung (7a) und/oder der Motorausrichtung (7b) zu generieren, um jegliche Abweichung von den vorgegebenen Werten zu korrigieren.

5. Roboter nach einem der vorhergehenden Ansprüche, wobei die Bewegungsmittel (4) eine Vielzahl von Bewegungsmodulen (5) umfassen.

6. Roboter nach dem vorhergehenden Anspruch, wobei die Bewegungsmittel (4) zwei Bewegungsmodule (5) umfassen.

7. Roboter nach einem der vorhergehenden Ansprüche, wobei die Bewegungsmittel (4) eine Vielzahl von freilaufenden Schwenkrollen umfassen, vorzugsweise zwei freilaufende Schwenkrollen.

8. Roboter nach dem vorhergehenden Anspruch, wobei die freilaufenden Schwenkrollen an der Vorderseite positioniert sind.

9. Roboter nach Anspruch 7 oder 8, wobei die Bewegungsmittel (4) Folgendes umfassen:
- mindestens eine Achse, die ausgestaltet ist, um eine jede freilaufende Schwenkrolle mit dem Rahmen (2) zu verbinden und die ausgelegt ist, um sich zwischen einer abgesenkten Position und einer angehobenen Position relativ zum Rahmen (2) um eine Referenzachse zu drehen, die senkrecht zur Achse positioniert ist;
- elastische Mittel, die ausgelegt sind, um auf der mindestens einen Achse gegen eine Anhebebewegung der jeweiligen Achse zu wirken.

10. Roboter nach einem der Ansprüche 1 bis 6, wobei die Bewegungsmittel (4) zwei feststehende Antriebsräder umfassen, die fest am Rahmen (2) befestigt und mit dem mindestens einen Rotationsmotor (7a) verbunden oder verbindbar sind, ausgelegt, um eine axiale Rotation der festen Antriebsräder zu steuern.

11. Roboter nach einem der vorhergehenden Ansprüche, wobei die Ausrichtungswelle (8) eines jeden Bewegungsmoduls (5) hohl und ausgestaltet ist, um mindestens eine Stromverkabelung (9) des Bewegungsmoduls (5) zu beherbergen.

12. Roboter nach einem der vorhergehenden Ansprüche, wobei die Ausrichtungswelle (8) vertikal relativ zum Rahmen (2) bewegbar ist, um eine Höhenausrichtung des Rahmens (2) relativ zum Boden zu erlauben.

## Revendications

1. Robot tondeuse à gazon comprenant :
- un châssis (2) ;
- des moyens de coupe (3) configurés pour tondre une pelouse, en réglant la hauteur de ladite pelouse ;
- des moyens de déplacement (4) associés au châssis (2) pour le déplacer le long d'une trajectoire de travail ; lesdits moyens de déplacement (4) comprenant au moins un module de déplacement (5) comprenant :
- une roue motrice réglable (6) définissant intérieurement un espace de confinement ;
- un moteur de rotation (7a) positionné au moins partiellement à l'intérieur de l'espace de confinement et configuré pour commander une rotation axiale, autour d'un axe respectif (X) de rotation, de la roue d'entraînement réglable (6) pour permettre une avancée, avec roulement, de la roue (6) sur l'herbe ;
- un arbre (8) pour l'orientation de la roue (6), soutenu de manière rotative par ledit châssis (2) tournant autour d'un axe d'orientation (Y) à angle droit par rapport à l'axe (X) de rotation de la roue d'entraînement réglable (6) et soutenant la roue d'entraînement réglable (6) et le moteur de rotation (7a),
- un moteur d'orientation (7b) soutenu par le châssis (2) et relié fonctionnellement à l'arbre d'orientation (8) pour le faire tourner autour de l'axe d'orientation (Y) et orienter ladite roue d'entraînement réglable (6) dans une direction prédéterminée ;
**caractérisé en ce que** les moyens de déplacement (4) comprennent :
- au moins un axe (20) destiné à relier chaque module de déplacement (5) au châssis (2) et configuré pour tourner autour d'un axe de référence, positionné perpendiculairement audit axe, entre une position abaissée et une position relevée par rapport au châssis (2) ,
- des moyens élastiques (21) configurés pour agir sur le au moins un axe (20) à l'encontre d'un mouvement de soulèvement dudit axe (20).

2. Robot selon la revendication 1, dans lequel, dans chaque module de déplacement (5), l'excursion angulaire maximale de la roue motrice réglable respective (6) autour de l'axe d'orientation (Y) est supérieure ou égale à 90°.

3. Robot selon la revendication 1 ou 2, dans lequel, dans chaque module de mouvement (5), l'excursion angulaire maximale de la roue motrice réglable respective (6) autour de l'axe d'orientation (Y) est inférieure ou égale à 180°.

4. Robot selon l'une quelconque des revendications précédentes, comprenant des moyens de mesure associés à l'au moins un module de déplacement (5) et configurés pour mesurer des paramètres représentant une vitesse de rotation et/ou une orientation de la roue motrice réglable respective (6), lesdits moyens de mesure étant configurés pour comparer les paramètres mesurés à des valeurs prédéterminées respectives générant des signaux de commande du moteur de rotation (7a) et/ou du moteur d'orientation (7b) pour corriger tout écart par rapport auxdites valeurs prédéterminées.

5. Robot selon l'une quelconque des revendications précédentes, dans lequel les moyens de déplacement (4) comprennent une pluralité de modules de déplacement (5).

6. Robot selon la revendication précédente, dans lequel les moyens de déplacement (4) comprennent deux modules de déplacement (5).

7. Robot selon l'une quelconque des revendications précédentes, dans lequel les moyens de déplacement (4) comprennent une pluralité de roues folles pivotantes, de préférence deux roues folles pivotantes.

8. Robot selon la revendication précédente, dans lequel lesdites roues folles pivotantes sont positionnées à l'avant.

9. Robot selon la revendication 7 ou 8, dans lequel les moyens de déplacement (4) comprennent :
- au moins un axe destiné à relier chaque roue folle pivotante au châssis (2) et configuré pour tourner autour d'un axe de référence, positionné perpendiculairement audit axe, entre une position abaissée et une position relevée par rapport au châssis (2),
- des moyens élastiques configurés pour agir sur le au moins un axe contre un mouvement de soulèvement de l'axe respectif.

10. Robot selon l'une quelconque des revendications 1 à 6, dans lequel les moyens de déplacement (4) comprennent deux roues motrices fixes solidaires du châssis (2) et reliées ou pouvant être reliées à au moins un moteur de rotation (7a) configuré pour commander une rotation axiale desdites roues motrices fixes.

11. Robot selon l'une quelconque des revendications précédentes, dans lequel l'arbre d'orientation (8) de chaque module de déplacement (5) est creux et est destiné à recevoir au moins un câblage électrique (9) du module de déplacement (5).

12. Robot selon l'une quelconque des revendications précédentes, dans lequel l'arbre d'orientation (8) est mobile verticalement par rapport au châssis (2), pour permettre un réglage en hauteur du châssis (2) par rapport au sol.
